# EUROPEAN PATENT SPECIFICATION

(11) **EP 4 008 424 B1**
(45) Date of publication and mention of the grant of the patent: **14.05.2025**
(21) Application number: 21209204.3
(22) Date of filing: 19.11.2021
(51) Int. Cl.: B01D 53/04, B01D 53/047, C10L 3/10, B01D 53/02

(54) **METHOD AND SYSTEM FOR BIOGAS POLISHING**
VERFAHREN UND SYSTEM ZUM BIOGASPOLIEREN
PROCÉDÉ ET SYSTÈME DE POLISSAGE AU BIOGAZ

(30) Priority: 20.11.2020 NL 2026938
(43) Date of publication of application: 08.06.2022
(73) Proprietor: Host Holding B.V., 7521 PS Enschede (NL)
(72) Inventor: BOS, Martin Johan, 7521 PS Enschede (NL); KLEIN TEESELINK, Hermanus, 7521 PS Enschede (NL)
(74) Representative: Patentwerk B.V.

(56) References cited:
- EP-A1- 2 963 107
- EP-A1- 3 191 210
- EP-B1- 2 963 107
- EP-B1- 3 191 210
- CA-A1- 2 688 638
- CA-C- 2 688 638
- US-A1- 2008 282 892
- US-A1- 2014 060 322

## Description

The invention relates to a method for (bio)gas polishing via adsorption, in particular pressure and/or temperature swing adsorption. The invention also relates to a system for (bio)gas polishing via adsorption, in particular temperature swing adsorption.

Biogas produced in an anaerobic digester contains roughly 60% methane and 40% carbon dioxide (CO2). One of the methods of bulk removal of CO2 is the use of membrane based upgrading systems. Without installing an excessive amount of membranes, the CO2 content can be reduced to 1 to 2 vol.% of CO2 in methane. An example of a biogas upgrading process is described in EP 2963107 A1, which document focusses on the upgrading of a stream of biogas comprising methane and CO2 by making use of a solid sorbent. In order to liquefy the methane (to produce bio-LNG) the CO2 content should be reduced significantly, preferably to a CO2 content of 200 ppm or lower. Preferably, the CO2 content is reduced to approximately 50 ppm (0,005 vol%) in order to prevent freezing of CO2 in the liquefaction installation. To reduce the CO2 content from 2 vol% to said low concentrations a polishing installation is required. Typically, such polishing process could for example be based on the operation principle of temperature swing adsorption (TSA), pressure swing adsorption (PSA), a combination thereof (PTSA) and/or via membranes. When TSA is applied, the polishing units typically consist of at least two vessels, which alternate between adsorption and regeneration mode. In adsorption mode, CO2 is removed from the biomethane by the sorbent and in regeneration mode, the sorbent is heated to release the adsorbed CO2. During adsorption the biomethane from the upgrading installation is fed to a vessel containing a zeolite-based sorbent with high affinity for CO2 and no affinity for methane. The CO2 is adsorbed on the sorbent and removed from the biomethane. Due to the high affinity for CO2 of the zeolite-based sorbent, CO2 concentrations well below 50 ppm can be reached. As soon as breakthrough of CO2 (CO2 in the gas outlet of the vessel in adsorption mode) is occurring, the vessel switches between adsorption and regeneration mode. The vessel in regeneration mode will be heated by heat recovered from the biogas compressor of the upgrading installation. By supplying heat the CO2 will be released from the zeolite-based sorbent. After cooling, the sorbent it is ready to be reused in adsorption mode. A drawback of this known process is that the conventional zeolite-based sorbents require relatively high temperatures during regeneration. These temperatures are typically in the range of 200 to 250 degrees Celsius. Consequently, this process requires a rather high energy consumption, which is typically 10 to 20% of the overall energy requirement for the liquefaction of methane step.

It is a goal of the invention to provide a more energy efficient solution for carbon dioxide removal from biogas, in particular biomethane, or at least to provide an alternative to the know carbon dioxide removal solutions.

The invention provides thereto a method for (bio)gas polishing, in particular (bio)methane polishing, via adsorption, in particular pressure and/or temperature swing adsorption, comprising the steps of:
- providing a feed of (bio)gas comprising at least methane and a carbon dioxide, wherein the feed of biogas comprises comprising at least 95 vol% (bio)methane, preferably at least 97 vol%, and preferably at least 0.1 vol% carbon dioxide, more preferably at least 0.5 vol% carbon dioxide;
- subjecting the biogas to at least one adsorption step by introducing the biogas in at least one reactor, the reactor comprising at least one sorbent that is selective for carbon dioxide;
- enabling adsorption of at least part of the carbon dioxide; and
- removal of at least part of the polished biogas from the reactor, which polished biogas comprises a carbon dioxide concentration below 200 ppm, preferably below 100 ppm;
wherein the sorbent is an amine based sorbent comprising benzylamine.

The method according to the present invention benefits in several way over a conventional method which makes use of a zeolite based sorbent. The application of an amine based sorbent enables the use of substantially lower temperatures during the regeneration of the sorbent. It is even conceivable that the required regeneration temperature is reduced by half. This is beneficial from energetic point of view. The lower required regeneration temperatures further enable that residual heat of another process could be applied for facilitating the regeneration of the sorbent. Such residual heat could for example originate from a processing step applied to the biogas prior to the polishing step, for example waste heat originating from a biogas compressor or from a compressor applied during the liquefaction of methane. The possibility to use lower temperatures may further positively contribute to the durability and/or life span of the reactor(s). The use of an amine based sorbent for a methane polishing step enables in particular that the regeneration temperature can be reduced to 80 to 100 degrees Celsius, where conventional zeolite based polishing steps require temperatures of 200 to 250 degrees Celsius. For conventional methods directed to (bio)methane polishing via adsorption using zeolite based sorbents, up to 20% of the required energy, in particular for polishing and liquefaction, is needed for the regeneration of sorbent thereby releasing carbon dioxide. It is further beneficial that the amine based sorbent allows for chemical bonding of carbon dioxide whereas zeolite based sorbents will only physically bond with carbon dioxide. A chemical bond is more stable compared to a physical bond which could positively affect the adsorbing process under fluctuating process conditions. Further, it is more selective when compared to a physical bond which could positively contribute to the adsorption process.

When it is referred to the term 'sorbent' and/or '(ad)sorbent material' also the term 'adsorbent' could be used. The amine based sorbent according to the present invention has a high affinity for carbon dioxide and substantially no affinity for methane. Where the term 'polishing' is applied, also the term 'upgrading' could be used. Where the term 'biogas' is used, also the term 'methane' or 'biomethane' could be applied. Where the term 'polished biogas' is used, also the term 'polished biomethane' could be used when referring to the biogas/biomethane comprising a carbon dioxide concentration below 200 ppm, preferably below 100 ppm, more preferably below 75 ppm and even more preferably below 50 ppm. It is even conceivable that part of the polished biogas is removed from the reactor when comprising a carbon dioxide concentration below 40 ppm, and possibly even below 25 ppm.

The biogas provided as feed is typically a methane based feed gas, in particular biomethane preferably originating from a biogas upgrading installation. The methane based feed gas comprises at least a fraction of carbon dioxide. Despite the term biogas indicates a bio based feed, this is not necessarily required for the present invention. The biogas feed could also be methane gas originating from fossil energy sources. Preferably, the feed of biogas comprises at least 0.1 vol% carbon dioxide, more preferably at least 0.5 vol% carbon dioxide, It is also conceivable that the feed of biogas comprises at least 1 vol% carbon dioxide, in particular at least 1.5 vol% carbon dioxide, more in particular at least 2 vol% carbon dioxide. A further non-limiting example is a feed of biogas comprising between 2 and 3 vol% of carbon dioxide. Preferably, the feed of biogas comprises less than 5 vol% carbon dioxide, more preferably less than 3 vol%. The method according to the present invention is in particular configured to provide polished biogas (or biomethane) which is suitable for liquefaction, in particular in order to produce bio-LNG.

The method according to the invention may comprise at least two reactors which alternate between adsorption mode and regeneration mode. It is also conceivable that multiple reactors are applied in a method according to the present invention, preferably wherein each reactor alternates between adsorption mode and regeneration mode.

Due to the high affinity for CO2 of the amine based sorbent, relatively low CO2 concentrations can be reached in the biogas product when applying the method according to the present invention. In a preferred embodiment, at least part of the polished biogas comprises a carbon dioxide concentration below 75 ppm, preferably below 50 ppm. It is for example conceivable that the polished biogas, in particular the biomethane, comprises approximately 50 ppm carbon dioxide.

Typically, at least one reactor is operated at a first temperature during the adsorption step, wherein the first temperature is in the range of 15 to 50 degrees Celsius, in particular 35 to 45 degrees Celsius. The at least one reactor could further be operated at atmospheric pressures or at pressures up to 20 bar. It is for example conceivable that the reactor operates at pressures up to 16 bar.

Adsorption of the carbon dioxide by the amine based sorbent is an exothermal process, wherein a relatively high amount of heat is released. For example, the physical adsorption which occurs when using a zeolite based sorbent releases only about 20% of the heat compared to the (chemical) adsorption process according to the present invention. In order to compensate for the produced heat it is beneficial if at least part of the reactor is cooled during the adsorption of carbon dioxide. Cooling of at least part of the reactor may further enhance the adsorption process for this specific invention. It is for example possible that cooling is provided via a heat exchanging surface. Preferably at least one, more preferably each, reactor is provided with an external and/or internal heat exchanging surface. Cooling of at least part of the reactor is in particular beneficial since amine based sorbent have relatively limited thermal conductive properties, in particular when compared to zeolite based sorbents. The relatively limited thermal conductive properties of amine based sorbent could also have the consequence that a relatively large amount of heat is required for the desorption of carbon dioxide and/or that relatively long regeneration times are required. Hence, it is not a straight forward choice for a skilled person to apply an amine based sorbent for the polishing of methane in order to obtain the required low CO2 concentrations. However, the heat requirement is at least partially compensated by the relatively low regeneration temperature which is needed for regeneration of the sorbent. As indicated above, due to the relatively low temperatures, it is possible to use residual heat of other processes for facilitating the regeneration of the sorbent.

Typically, at least one reactor is operated at a first temperature during the adsorption step. In a preferred embodiment, the method according to the present invention further comprises the steps of stopping the provision of feed of biogas, in particular biomethane, to at least one reactor when a predetermined reaction condition is reached, increasing the operating temperature to a second temperature which is preferably higher than a first temperature, thereby desorbing at least part of the adsorbed carbon dioxide and the step of removing of the desorbed carbon dioxide from the reactor. The predetermined reaction condition could for example be breakthrough of carbon dioxide from the product stream (of the reactor) or reaching of a predetermined CO2 fraction in the reactor or outlet. It is for example possible that the provision of feed of biogas is stopped when a carbon dioxide concentration of about 25 ppm in the outlet is detected. In this manner, the adsorbed carbon dioxide could be recovered in a relatively simple manner. Basically, at least part of the adsorbed carbon dioxide will be released from the sorbent by heating the operating temperature to a second temperature. The second temperature is typically below 150 degrees Celsius, preferably below 140 degrees Celsius and more preferably below 130 degrees Celsius. It is even conceivable that the second temperature is in a range of 80 to 150 degrees Celsius, preferably in ta range of120 to 150 degrees Celsius.

In a further preferred embodiment, at least part of the (polished) biogas is used as purge gas to transport carbon dioxide from at least one reactor. In this way, the carbon dioxide can be removed from the reactor in a relatively simple and efficient manner. This off gas could be provided to or returned to a biogas upgrading installation in order to assure that no valuable (bio)methane is lost during the polishing method.

In a preferred embodiment, the amine based sorbent comprises at least one primary amine. It is for example conceivable that the amine based sorbent comprises at least one primary organic amine compound. It is beneficial to apply an amine based sorbent with comprises primary amines as this is beneficial for the reaction kinetics, efficiency and/or the adsorption capacity.

It is also conceivable that the amine based sorbent comprises at least one secondary amine and/or at least one tertiary amine. The latter would in particular be suitable in case the biogas feed comprises a fraction of H2O. It is also possible that the amine based sorbent comprises a combination of primary, secondary and/or tertiary amines.

In a possible embodiment, the amine based sorbent comprises at least one amine impregnated onto (or upon) a carrier. Non-limiting examples of possible amine based sorbent to be applied are tetraethylenepentamine (TEPA) and/or (branched) polyethylenimine (bPEI/PEI). In case branched polyethylenimine is applied, the molecular weight could for example be 600 (bPEI 600) or 10,000 (bPEI 10k).

It is also conceivable that the amine based sorbent comprises at least one amine grafted adsorbent. Non-limiting examples of possible amine based sorbents to be applied are (3-Aminopropyl)triethoxysilane (APTES), (8-aminopyrene-1,3,6-trisulfonic acid, trisodium salt) (APTS) and/or aminoethylaminopropyltrimethoxysilane (AEAPTS). Yet another possibility is the use of an amine based sorbent comprising covalent bonded amines. Non-limiting example thereof is aziridine

The amine based sorbent according to the present invention comprises benzylamine, in particular polymer bound benzylamine. This could for example be a (primary) benzylamine which is chemically bonded to a polymer. A non-limiting example of amine based sorbents to be applied is a benzylamine bonded to polystyrene which is crosslinked with divinylbenzene. Benzylamine benefits of good reaction kinetics and a good carbamate stability. In addition, benzylamine has a relatively large enthalpy of protonation resulting in a larger temperature dependent change in basicity and enhanced CO2 cyclic capacity. Further, benzylamine benefits of being relatively easy to regenerate.

In a preferred embodiment, the number of moles of nitrogen per kilogram of sorbent applied is in the range of 4 to 8. Hence, possibly the amine loading of the amine based sorbent is at least 4 moles of nitrogen per kilogram of sorbent.

The feed of biogas preferably originates from a biogas upgrading installation. It is for example possible that the feed of biogas originates from a biogas upgrading installation using membranes. Typically, the biogas provided to the biogas upgrading installations contains approximately 60% methane and 40% carbon dioxide and is subjected to bulk removal of carbon dioxide via the use of membranes. Hence, a feed of biogas comprising at least 95 vol% methane, preferably at least 97 vol%, and preferably at least 0.1 vol% carbon dioxide, preferably at most 5 vol% carbon dioxide, can be obtained. The membrane based upgrading step of biogas may optionally form part of the method according to the present invention. Further, the method according to the present invention may comprise the step of subjecting the polished biogas to liquefaction. Hence, it can be part of the method to liquefy the methane in order to produce bio-LNG. The method according to the present invention is also suitable for trace removal of other components than carbon dioxide if present in the biogas feed. Non-limiting examples of such traces are SOx, NOx, H2S and/or H2O.

The invention also relates to the use of an amine based sorbent, preferably comprising benzylamine, for a methane polishing step, in particular in order to obtain a polished biogas comprising a carbon dioxide concentration below 200 ppm, preferably below 100 ppm, more preferably below 75 ppm, even more preferably below 50 ppm.

The invention further relates to a system for (bio)methane polishing via adsorption, in particular pressure and/or temperature swing adsorption, the system comprising at least one reactor, said reactor comprising at least one inlet for a gaseous feed and at least one outlet for a gaseous product, wherein the reactor can be operated in at least an adsorption mode and a regeneration mode and wherein the reactor comprises at least one sorbent, and wherein the sorbent is an amine based sorbent, preferably an amine based sorbent comprising benzylamine. The system according to the present invention could in particular be configured for or suitable to apply the method according to the present invention.

The sorbent is typically configured to remove at least part of the carbon dioxide from the biomethane in the adsorption mode and to release at least part of the adsorbed CO2 in the regeneration mode. The amine based sorbent can be any of the abovementioned examples of sorbents for use in a method according to the present invention.

In a preferred embodiment, the method and/or system comprises at least two reactors, wherein each reactor is configured to alternate between the adsorption mode and the regeneration mode. The carbon dioxide is adsorbed on the sorbent and thus removed from the biogas/biomethane. As soon as breakthrough of CO2 (i.e. CO2 in the gas outlet of the reactor in adsorption mode) is occurring, the reactor switches from adsorption mode to regeneration mode. It is also possible that alternation between adsorption mode and regeneration mode is time indicated and/or based upon the CO2 fraction in the reactor. This could for example be controlled by at least one control unit.

A drawback of the use of an amine based sorbent is that such sorbent has relatively limited thermal conductive properties and that a relatively large amount of heat is required for the desorption of carbon dioxide due to the chemical bonding of carbon dioxide. It is therefore preferred that the heat exchanging surface per reactor volume of at least one reactor (applied in the method and/or system according to the present invention) is at least 150 m2/m3. Hence, such embodiment could provide sufficient cooling and/or heating capacity to ensure adsorption of CO2 from biogas via a method according to the present invention and subsequently regeneration of the amine based sorbent according to the present invention. A relatively large heat exchanging surface per reactor volume is desired. Hence, it is also possible that the heat exchanging surface per reactor volume of at least one reactor is at least 200 m2/m3, preferably at least 250 m2/m3, more preferably at least 300 m2/m3, and even more preferably at least 350 m2/m3. The use of a reactor having a relatively large heat exchanging surface per reactor volume is also beneficial in order to provide sufficient cooling during the (exothermal) adsorption process.

A non-limiting example of a possible reactor type which could be applied for a system and method according to the present invention is a shell and tube reactor. Another non-limiting example is a plate and shell reactor. Any further conventional heat exchanger type of reactors having a relatively large heat exchanging surface per reactor volume could be applied. It is conceivable that the reactor comprises a plurality of (longitudinal) fins, configured to increase the heat exchanging surface.

The invention will be further elucidated by means of non-limiting exemplary embodiments illustrated in the following figures, in which:
- figure 1 shows a schematic representation of a system according to the present invention; and
- figures 2a and 2b show an example of a reactor which could be applied in a method and/or system according to the present invention.

Within these figures, similar reference numbers correspond to similar or equivalent elements or features.

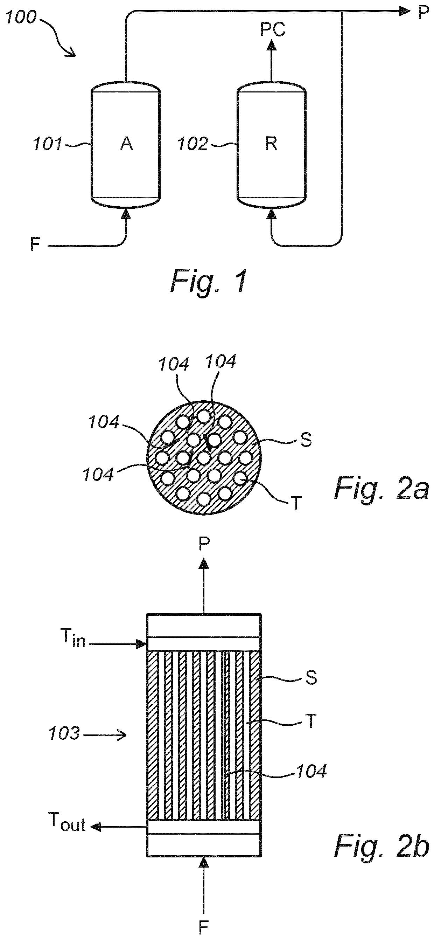

Figure 1 shows a schematic representation of a system 100 according to the present invention. The system 100 is in particular configured to apply a method according to the present invention. The system 100 is configured for biomethane polishing via pressure and/or temperature swing adsorption. The shown embodiment of the system 100 comprises two reactors 101, 102 which comprise at least one amine based sorbent. Each reactor 101, 102 is configured to alternate between the adsorption mode A and the regeneration mode R. A feed of biogas F comprising at least 95 vol% methane, preferably at least 97 vol%, and a fraction of carbon dioxide, for example at least 0.1 vol% carbon dioxide, is provided to the reactor 101 in adsorption mode, where the biogas is subjected to an adsorption step. In adsorption mode, CO2 is removed from the biogas (or biomethane) by the sorbent. In the regeneration mode, the amine based sorbent is heated to release the adsorbed CO2. Due to the high affinity for CO2 of the amine based sorbent, CO2 concentrations below 200 ppm, or even below 50 ppm, can be reached. The polished biogas of the product flow P typically comprises a carbon dioxide concentration below 200 ppm, preferably below 100 ppm, even more preferably below 75 ppm or 50 ppm. For example, soon as breakthrough of CO2 is occurring, the reactor 101, 102 switches between adsorption mode A and regeneration mode R. Breakthrough can be defined as the presence of CO2 in the gas outlet of the reactor 101 in adsorption mode A. The reactor 102 in regeneration mode R will be heated, preferably by heat recovered from a biogas compressor of a biogas upgrading installation. By supplying heat the CO2 will be released from the amine based sorbent. The polished biogas P can be used as purge gas to transport carbon dioxide from the reactor 102, such that a flow of CO2 and a fraction of biomethane is obtained PC. After cooling, the amine based sorbent it is ready to be reused in adsorption mode A.

Figures 2a and 2b show a schematic overview of a non-limiting example of a reactor 103 which could be applied in a method and/or system according to the present invention. Figure 2a shows a radial cross section of the reactor 103 , where figure 2b shows an axial cross section of the reactor 103. The reactor 103 shown is a shell and tube reactor 103. This is beneficial as such reactor benefit of a relatively large heat exchanging surface per reactor volume. In the shown embodiment, the tubes T are applied for the cooling and/or heating. A cooling medium, such as water, is let though the reactor via the tubes Tin, Tout. The amine based sorbent S is present in the shell side S of the reactor. It is also conceivable that the sorbent and cooling medium are exchanged from shell side and tube side. In a preferred embodiment, the reactor 103 comprises a plurality of (longitudinal) fins 104, configured to further increase the heat exchanging surface per reactor volume. In the figures, the adsorption mode A is shown, wherein the feed F comprises biogas having a higher CO2 content than the polished biogas of the product flow P.

It will be clear that the invention is not limited to the exemplary embodiments which are illustrated and described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

The verb 'comprise' and its conjugations as used in this patent document are understood to mean not only 'comprise', but to also include the expressions 'contain', 'substantially contain', 'formed by' and conjugations thereof.

## Claims

1. Method for biogas polishing via adsorption, in particular pressure and/or temperature swing adsorption, comprising the steps of:
- providing a feed of biogas comprising at least methane and carbon dioxide, wherein the feed of biogas comprises at least 95 vol% methane, preferably at least 97 vol%;
- subjecting the biogas to at least one adsorption step by introducing the biogas in at least one reactor (101, 102, 103), the reactor (101, 102, 103) comprising at least one sorbent that is selective for carbon dioxide;
- enabling adsorption of at least part of the carbon dioxide; and
- removal of at least part of the polished biogas from the reactor (101, 102, 103), which polished biogas comprises a carbon dioxide concentration below 200 ppm, preferably below 100 ppm;
wherein the sorbent is an amine based sorbent comprising benzylamine.

2. Method according to claim 1, wherein at least part of the polished biogas comprises a carbon dioxide concentration below 75 ppm, preferably below 50 ppm.

3. Method according to any of the previous claims, wherein at least part of the reactor (101, 102, 103) is cooled during adsorption of at least part of the carbon dioxide.

4. Method according to any of the previous claims, wherein the reactor (101, 102, 103) is operated at a first temperature during the adsorption step, and wherein the method further comprises the steps of:
- stopping the provision of feed of biogas to at least one reactor (101, 102, 103) prior when a predetermined reaction condition is reached, such as breakthrough of carbon dioxide from the product stream;
- increasing the operating temperature to a second temperature which is higher than the first temperature, thereby desorbing at least part of the adsorbed carbon dioxide; and
- removing of the desorbed carbon dioxide from the reactor (101, 102, 103).

5. Method according to claim 4, wherein at least part of the polished biogas is used as purge gas to transport carbon dioxide from the reactor (101, 102, 103).

6. Method according to any of the previous claims, wherein the amine based sorbent comprises a primary amine, a secondary amine and/or a tertiary amine.

7. Method according to any of the previous claims, wherein the amine based sorbent comprises an amine impregnated onto a carrier.

8. Method according to any of the previous claims, wherein the amine based sorbent comprises an amine grafted adsorbent.

9. Method according to any of the previous claims, wherein the amine based sorbent comprises covalent bonded amines.

10. Method according to any of the previous claims, wherein the amine based sorbent comprises polymer bound benzylamine.

11. Method according to any of the previous claims, wherein the number of moles of nitrogen per kilogram of sorbent applied is in the range of 4 to 8.

12. Method according to any of the previous claims, wherein the feed of biogas originates from a biogas upgrading installation.

13. Use of an amine based sorbent comprising benzylamine for a biogas polishing step via adsorption, in particular in order to obtain a polished biogas comprises a carbon dioxide concentration below 200 ppm, preferably below 100 ppm.

14. System (100) for biogas polishing via adsorption, in particular pressure and/or temperature swing adsorption, the system comprising:
- at least one reactor (101, 102, 103), said reactor (101, 102, 103) comprising at least one inlet for a gaseous feed and at least one outlet for a gaseous product;
wherein the reactor (101, 102, 103) can be operated in at least an adsorption mode and a regeneration mode and wherein the reactor (101, 102, 103) comprises at least one sorbent;
wherein the sorbent is an amine based sorbent comprising benzylamine.

15. System according to claim 14, wherein the system comprises at least two reactors (101, 102, 103), wherein each reactor (101, 102, 103) is configured to alternate between the adsorption mode and the regeneration mode.

## Patentansprüche

1. Verfahren zur Biogasaufbereitung durch Adsorption, insbesondere Druck- und/oder Temperaturwechseladsorption, umfassend die folgenden Schritte:
- Bereitstellen einer Einspeisung von Biogas, umfassend mindestens Methan und Kohlendioxid, wobei die Einspeisung von Biogas mindestens 95 Volumen-% Methan, vorzugsweise mindestens 97 Volumen-% umfasst;
- Unterziehen des Biogases mindestens einem Adsorptionsschritt durch Einleiten des Biogases in mindestens einen Reaktor (101, 102, 103), wobei der Reaktor (101, 102, 103) mindestens ein Sorbens umfasst, das für Kohlendioxid selektiv ist;
- Ermöglichen einer Adsorption von zumindest einem Teil des Kohlendioxids; und
- Entfernen von zumindest einem Teil des aufbereiteten Biogases aus dem Reaktor (101, 102, 103), wobei das aufbereitete Biogas eine Kohlendioxidkonzentration unter 200 ppm, vorzugsweise unter 100 ppm umfasst;
wobei das Sorbens ein aminbasiertes Sorbens ist, umfassend Benzylamin.

2. Verfahren nach Anspruch 1, wobei zumindest ein Teil des aufbereiteten Biogases eine Kohlendioxidkonzentration unter 75 ppm, vorzugsweise unter 50 ppm, umfasst.

3. Verfahren nach einem der vorherigen Ansprüche, wobei zumindest ein Teil des Reaktors (101, 102, 103) während einer Adsorption von zumindest einem Teil des Kohlendioxids gekühlt wird.

4. Verfahren nach einem der vorherigen Ansprüche, wobei der Reaktor (101, 102, 103) während des Adsorptionsschritts bei einer ersten Temperatur betrieben wird und wobei das Verfahren ferner die folgenden Schritte umfasst:
- Anhalten der Bereitstellung einer Einspeisung von Biogas zu mindestens einem Reaktor (101, 102, 103), bevor eine vorbestimmte Reaktionsbedingung erreicht wird, wie beispielsweise ein Durchbruch von Kohlendioxid aus dem Produktstrom;
- Erhöhen der Betriebstemperatur auf eine zweite Temperatur, die höher ist als die erste Temperatur, wodurch zumindest ein Teil des adsorbierten Kohlendioxids desorbiert wird; und
- Entfernen des desorbierten Kohlendioxids aus dem Reaktor (101, 102, 103).

5. Verfahren nach Anspruch 4, wobei zumindest ein Teil des aufbereiteten Biogases als Spülgas verwendet wird, um Kohlendioxid aus dem Reaktor (101, 102, 103) zu transportieren.

6. Verfahren nach einem der vorherigen Ansprüche, wobei das aminbasierte Sorbens ein primäres Amin, ein sekundäres Amin und/oder ein tertiäres Amin umfasst.

7. Verfahren nach einem der vorherigen Ansprüche, wobei das Sorbens auf Aminbasis ein auf einem Träger imprägniertes Amin umfasst.

8. Verfahren nach einem der vorherigen Ansprüche, wobei das aminbasierte Sorbens ein mit Amin gepfropftes Adsorbens umfasst.

9. Verfahren nach einem der vorherigen Ansprüche, wobei das aminbasierte Sorbens kovalent gebundene Amine umfasst.

10. Verfahren nach einem der vorherigen Ansprüche, wobei das aminbasierte Sorbens polymergebundenes Benzylamin umfasst.

11. Verfahren nach einem der vorherigen Ansprüche, wobei die Molzahl von Stickstoff pro Kilogramm angewandtem Sorbens in dem Bereich von 4 bis 8 ist.

12. Verfahren nach einem der vorherigen Ansprüche, wobei die Einspeisung von Biogas aus einer Biogasaufreinigungsanlage stammt.

13. Verwendung eines aminbasierten Sorbens, umfassend Benzylamin für einen Biogasaufbereitungsschritt durch Adsorption, insbesondere um ein aufbereitetes Biogas zu erlangen, das eine Kohlendioxidkonzentration unter 200 ppm, vorzugsweise unter 100 ppm, umfasst.

14. System (100) zum Biogasaufbereiten durch Adsorption, insbesondere Druck- und/oder Temperaturwechseladsorption, das System umfassend:
- mindestens einen Reaktor (101, 102, 103), der Reaktor (101, 102, 103) umfassend mindestens einen Einlass für eine gasförmige Einspeisung und mindestens einen Auslass für ein gasförmiges Produkt;
wobei der Reaktor (101, 102, 103) in mindestens einem Adsorptionsmodus und einem Regenerationsmodus betrieben werden kann und wobei der Reaktor (101, 102, 103) mindestens ein Sorbens umfasst;
wobei das Sorbens ein aminbasiertes Sorbens ist, umfassend Benzylamin.

15. System nach Anspruch 14, wobei das System mindestens zwei Reaktoren (101, 102, 103) umfasst, wobei jeder Reaktor (101, 102, 103) konfiguriert ist, um zwischen dem Adsorptionsmodus und dem Regenerationsmodus abzuwechseln.

## Revendications

1. Procédé de polissage de biogaz par adsorption, en particulier par adsorption modulée en pression et/ou en température, comprenant les étapes consistant à :
- fournir une alimentation en biogaz comprenant au moins du méthane et du dioxyde de carbone, dans lequel l'alimentation en biogaz comprend au moins 95 % en volume de méthane, de préférence au moins 97 % en volume ;
- soumettre le biogaz à au moins une étape d'adsorption en introduisant le biogaz dans au moins un réacteur (101, 102, 103), le réacteur (101, 102, 103) comprenant au moins un sorbant qui est sélectif pour le dioxyde de carbone ;
- permettre l'adsorption d'au moins une partie du dioxyde de carbone ; et
- éliminer au moins une partie du biogaz poli du réacteur (101, 102, 103), lequel biogaz poli comprend une concentration de dioxyde de carbone inférieure à 200 ppm, de préférence inférieure à 100 ppm ;
dans lequel le sorbant est un sorbant à base d'amine comprenant de la benzylamine.

2. Procédé selon la revendication 1, dans lequel au moins une partie du biogaz poli comprend une concentration de dioxyde de carbone inférieure à 75 ppm, de préférence inférieure à 50 ppm.

3. Procédé selon l'une quelconque des revendications précédentes, dans lequel au moins une partie du réacteur (101, 102, 103) est refroidie pendant l'adsorption d'au moins une partie du dioxyde de carbone.

4. Procédé selon l'une quelconque des revendications précédentes, dans lequel le réacteur (101, 102, 103) fonctionne à une première température pendant l'étape d'adsorption, et dans lequel le procédé comprend en outre les étapes consistant à :
- arrêter la fourniture d'alimentation en biogaz d'au moins un réacteur (101, 102, 103) avant qu'une condition de réaction prédéterminée ne soit atteinte, telle qu'une percée de dioxyde de carbone à partir du flux de produit ;
- augmenter la température de fonctionnement à une seconde température qui est supérieure à la première température, désorbant ainsi au moins une partie du dioxyde de carbone adsorbé ; et
- éliminer le dioxyde de carbone désorbé du réacteur (101, 102, 103).

5. Procédé selon la revendication 4, dans lequel au moins une partie du biogaz poli est utilisée comme gaz de purge pour transporter le dioxyde de carbone du réacteur (101, 102, 103).

6. Procédé selon l'une quelconque des revendications précédentes, dans lequel le sorbant à base d'amine comprend une amine primaire, une amine secondaire et/ou une amine tertiaire.

7. Procédé selon l'une quelconque des revendications précédentes, dans lequel le sorbant à base d'amine comprend une amine imprégnée sur un support.

8. Procédé selon l'une quelconque des revendications précédentes, dans lequel le sorbant à base d'amine comprend un adsorbant greffé par une amine.

9. Procédé selon l'une quelconque des revendications précédentes, dans lequel le sorbant à base d'amine comprend des amines liées de manière covalente.

10. Procédé selon l'une quelconque des revendications précédentes, dans lequel le sorbant à base d'amine comprend de la benzylamine liée à un polymère.

11. Procédé selon l'une quelconque des revendications précédentes, dans lequel le nombre de moles d'azote par kilogramme de sorbant appliqué est compris entre 4 et 8.

12. Procédé selon l'une quelconque des revendications précédentes, dans lequel l'alimentation en biogaz provient d'une installation de valorisation de biogaz.

13. Utilisation d'un sorbant à base d'amine comprenant de la benzylamine pour une étape de polissage du biogaz par adsorption, en particulier pour obtenir un biogaz poli comprend une concentration de dioxyde de carbone inférieure à 200 ppm, de préférence inférieure à 100 ppm.

14. Système (100) de polissage de biogaz par adsorption, en particulier par adsorption modulée en pression et/ou en température, le système comprenant :
- au moins un réacteur (101, 102, 103), ledit réacteur (101, 102, 103) comprenant au moins une entrée pour une charge gazeuse et au moins une sortie pour un produit gazeux ;
dans lequel le réacteur (101, 102, 103) peut être exploité dans au moins un mode d'adsorption et un mode de régénération et dans lequel le réacteur (101, 102, 103) comprend au moins un sorbant ;
dans lequel le sorbant est un sorbant à base d'amine comprenant de la benzylamine.

15. Système selon la revendication 14, dans lequel le système comprend au moins deux réacteurs (101, 102, 103), dans lequel chaque réacteur (101, 102, 103) est configuré pour alterner entre le mode d'adsorption et le mode de régénération.
